Europäisches Patentamt

European Patent Office

Office européen des brevets

(19)

(11) **EP 1 143 634 A1**

(12) **EUROPEAN PATENT APPLICATION**

(43) Date of publication:
**10.10.2001 Bulletin 2001/41**

(51) Int Cl.⁷: **H04B 7/005**

(21) Application number: **00400955.1**

(22) Date of filing: **07.04.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ALCATEL**
**75008 Paris (FR)**

(72) Inventor: **Agin, Pascal**
**94370 Sucy en Brie (FR)**

(74) Representative: **El Manouni, Josiane et al**
**COMPAGNIE FINANCIERE ALCATEL**
**Dépt. Propr. Industrielle,**
**30, avenue Kléber**
**75116 Paris (FR)**

(54) **A method for setting compressed mode parameters and for setting a transmission quality target value for power control in a mobile radiocommunication system**

(57)    A method for setting compressed mode parameters for compressed mode in a mobile radiocommunication system, wherein transmission is interrupted during transmission gaps in compressed frames, and the transmission rate is correspondingly increased, in transmission time intervals including compressed frames, to compensate for said transmission gaps, a method wherein the transmission gap period is set to an even number of frames.

**EP 1 143 634 A1**

**Description**

The present invention is generally concerned with mobile radiocommunication systems.

The present invention is more particularly concerned with power control techniques used in such systems to improve performances (in terms of quality of service, of capacity,...etc.).

The present invention is in particular applicable to mobile radiocommunication systems of CDMA (Code Division Multiple Access) type. In particular, the present invention is applicable to UMTS (Universal Mobile Telecommunication System).

The CDMA is a multiple access technique which makes it possible for several users to be simultaneously active, using different spreading codes.

All that follows is valid for both downlink (link from BTS (Base Transceiver Station) to MS (Mobile Station)) and uplink (link from MS to BTS), but in order to simplify the description, only the downlink case will first be considered.

The quality of the link from a BTS to a MS depends on the ratio of the received signal power and the interference power at the MS (SIR: signal-to-interference ratio). When the SIR of one MS is low, or equivalently when the interference power is much larger than its power, its performance dramatically decreases. Therefore, in order to optimize the performance of a CDMA system, some algorithms are usually used in order to keep the SIR of each MS as close as possible to the target SIR at the receiver, like the inner loop power control algorithm.

The principle of the inner loop power control algorithm is that the MS periodically estimates the SIR of the received signal from the BTS, and compares this SIR to the target SIR ($SIR_{target}$). If this estimated SIR is lower than the target SIR, the MS sends a command to the BTS for the BTS to increase its transmit power. Otherwise, the MS sends a command to the BTS for the BTS to decrease its transmit power. The target SIR is chosen by the MS (or BTS) in function of the required quality of service.

Additionally, another and usually slower power control algorithm, namely outer loop power control algorithm, enables to choose the best value of the target SIR. The principle of this algorithm is to regularly evaluate the quality of the transmission (BER, BLER, ...) and to compare this quality with the required quality of service (for example BER of $10^{-3}$ for speech service, BLER of 0.1 for packet service, ...). If this quality is below the required quality of service, the target SIR is increased. Otherwise, the target SIR is decreased. This algorithm is usually slow, since the quality needs to be averaged over several frames in order to have a reliable estimate. Of course many variants of this basic algorithm exist.

In some situations, the target SIR may change significantly during the transmission. For example, this is the case when the spreading factor of the physical data channel changes. Indeed, the lowest the spreading factor of this channel, the largest the required transmit power. The spreading factor can change frequently in variable rate services such as packet service. Indeed, if the spreading factor changes, the target SIR will vary much (in the ratio of the spreading factor variation). It is also the case if the MS requires to change of service, since each service has a different target SIR.

Another example is the compressed mode. In an inter-frequency hard handover, the mobile needs to make measurements on a frequency different from the frequency used for the downlink transmission. Thus, the base station needs to stop its transmission towards the concerned mobile, in order to allow this mobile to make measurements on this other frequency. In the UMTS standard, this is known as downlink compressed mode (i.e. the downlink transmission is temporarily stopped). Uplink compressed mode is also possible to make measurements on frequencies that are close to the uplink frequency. The periods where transmission is stopped are usually called transmission gaps, and the frames including transmission gaps are usually called compressed frames. Besides, to compensate for the transmission gaps, the transmission rate has to be correspondingly increased. Therefore, during compressed mode, since the inner loop power control is regularly stopped, and since the transmission rate is correspondingly increased, the target SIR needs to be larger to reach the same quality of service than during non-compressed, or normal, mode.

Because the outer-loop power control algorithm is usually a slow process, the target SIR will not change immediately and the transmission quality will be degraded during several frames. In extreme cases, this could cause the lost of the call.

Moreover, in the case of compressed mode, the target SIR needs to be changed only at certain fixed time to enable the mobile to perform measurements and then the target SIR needs to be changed back to the previous value. The outer-loop power control algorithm will not be able to track such quick variations of SIR.

In a first European patent application, n° 99401766.3 filed on July 13, 1999 by Applicant, a solution has been proposed to solve this problem. Briefly, the basic idea in this first prior patent application is to anticipate the target SIR variation, i.e. to apply an expected variation, or offset, in an anticipated way, to the target SIR. This target SIR variation may be signaled from the transmitter to the receiver for a given transmission direction; for example, for downlink transmission, it may be signalled by the network to the MS or UE (User Equipment).

According to another idea in this first prior patent application, in order to keep the signaling as low as possible, the target SIR increase due to the increased instantaneous bit rate and the target SIR increase due to degraded performances in compressed frames (i.e. due to transmission gaps) may be separated. For example, when the transmission rate increase in compressed mode is obtained by spreading factor reduction, this may be written:

$$\Delta_{SIR} = 10\log(R_{CF}/R) + \delta_{SIR}$$

where R is the instantaneous net bit rate before and after the compressed frame and $R_{CF}$ is the instantaneous net bit rate during the compressed frame.

Since the bit rate variation will be known by the UE, only the additional target SIR increase $\delta_{SIR}$ due to degraded performances during compressed frames may be signaled. The signaling overhead can be low if this variation is signaled with other compressed mode parameters (including transmission gap length (or period where transmission is stopped), periodicity, ...). For example, 2 bits could enable to signal the following values of $\delta_{SIR}$:

- 00: 0 dB
- 01: 0.5 dB
- 10: 1 dB
- 11: 2 dB

Alternatively, $\Delta_{SIR}$ could be directly signaled, but a larger number of bits would be required.

The UE will have to increase the target SIR by $\Delta_{SIR}$ just before the compressed frames (or just after the transmission gap of the compressed frames) and decrease it back by the same value just after the compressed frames. This target SIR variation is done additionally to the usual downlink outer-loop algorithm that will have to take it into account. The UE may increase simultaneously its transmit power by the same amount before the compressed frame and decrease it just after the compressed frames in order for the downlink received SIR to be as quickly as possible close to this new target SIR.

According to another idea in this first prior patent application, at least when the transmission gap is at the end of the compressed frame, the performances in recovery frames (frames following the compressed frames) can also be degraded because of the power control interruption during the transmission gap. Therefore, it would be also desirable to increase the target SIR in recovery frames and to signal this target SIR increase to the UE. Alternatively, the same value ($\delta_{SIR}$) as for compressed frames could be used in order to decrease the required signaling.

Therefore, according to this first prior patent application, by anticipating the target SIR variation during compressed frames and recovery frames, an efficient outer loop power control in compressed mode can be achieved, at least when said compressed mode is obtained by reducing the spreading factor.

Now, in the UMTS standard for example, two ways exist to perform compressed mode:

- reducing the spreading factor in the compressed frame, enabling to increase the instantaneous bit rate and thus to stop the transmission during a few slots,
- using puncturing (i.e. several bits obtained after channel coding are not transmitted, so that the same amount of information bits can be sent over a shorter period, knowing that the channel coding will still enable to decode all information bits).

Compressed mode by puncturing has some particularities, which can be recalled by reference to the UMTS system for example.

One feature of UMTS is the possibility to transport multiple services on a same connection, i.e. multiple transport channels on a same physical channel. Such Transport Channels or TrCHs are separately processed according to a channel coding scheme (including error detecting, error correcting, rate matching, and interleaving) before being time-multiplexed to form a Coded Composite Transport Channel or CCTrCH to be mapped onto one or more physical channels. Processing according to this channel coding scheme is on a TTI (Transmission Time Interval) basis. In this channel coding scheme, rate matching includes the two techniques of puncturing and repeating; besides, an interframe interleaving is performed on the TTI length, or interleaving depth. Then each TTI is segmented into frames, and, after that, time-multiplexing and mapping on the physical channlel(s) are performed on a frame basis. Besides, each of the different transport channels TrCHi (i=1, ...n) which are multiplexed to form a CCTrCH has its own TTI length, noted TTIi.

More information on these aspects of UMTS can be found in Technical Specification 3G TS25 212 V3.0.0 (1999-10).

Puncturing in compressed mode, which is included in rate matching, and which can be provided in addition to puncturing or repetition in normal mode, can either be performed on a frame basis or on a TTI basis.

If puncturing in compressed mode is performed on a frame basis, the above-recalled method according to this first prior patent application still applies.

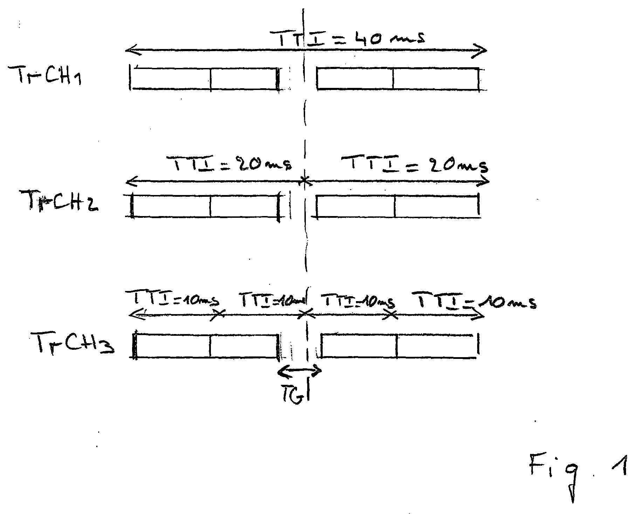

If puncturing in compressed mode is performed on a TTI basis, the transmission rate increase due to compressed mode applies to all frames of a TTI. Now, in the UMTS standard, TTI can be equal to 10, 20, 40, or 80ms. Besides, as already mentioned, each of the different transport channels TrCHi (i=1, ...n) which are multiplexed to form a CCTrCH has its own TTI length, noted TTIi. This is illustrated in figure 1, taking the example of three multiplexed transport channels noted TrCH1, TrCH2, TrCH3, and taking the example of TTI=40ms for TrCH1, TTI=20ms for TrCH2, TTI= 10ms for TrCH1, and a frame length equal to 10ms. In this figure, the case of four consecutive frames sent on a physical channel is illustrated by way of example, and the case of a transmission gap TG overlapping two consecutive frames (in the circumstances the second and the third one of the four illustrated frames) is also illustrated by way of example.

In standardization proposal TSGR1#10(00)0086 presented at the 3GPP TSG-RAN Working Group 1 meeting #10 Beijing, China, January 18th-21st, 2000, a modification of the above recalled method was presented for the case where the frames are compressed using puncturing and where puncturing is performed on a TTI basis.

According to this proposal of modification:

If there are "n" different TTI lengths in the CCTrCH (i.e. "n" transport channels multiplexed into the CCTrCH), then "n" separate DeltaSIR values (defined as coding gain degradation due to "too much" puncturing) DeltaSIRi, i=1... n, one for each TTI length, are signaled to the UE. These "n" DeltaSIR values should then be used in the following way for the outer loop power control.

For each frame the offset of the target SIR in compressed mode compared to target SIR in normal mode is:

$$\Delta SIRframe = max(\Delta SIR1, ..., \Delta SIRn)$$

where:

$$\Delta SIRi = \Delta SIRi\_compression + \Delta SIRi\_coding$$

If there is no transmission gap within the current TTIims for the TTI length of TTIi (i.e. within the current TTI of the transport channel TrCHi which is multiplexed inside this frame, as may also be understood by referring to figure 1), then:

$$\Delta SIRi\_compression = 0$$

$$\Delta SIRi\_coding = 0$$

If there is a transmission gap within the current TTIims for the TTI length of TTIi, then :

$$\Delta SIRi\_compression = 10 \log (F_i*N/(F_i*N-TGL_{F_i}))$$

$$\Delta SIRi\_coding = DeltaSIRi$$

Here $F_i$ is the number of frames in the TTIi, $TGL_{F_i}$ is the gap length in slots (either from one gap, or a sum of several gaps) within those $F_i$ frames, and N is the number of slots per frame (N = 15 in the UMTS standard).

This method therefore requires additional signaling compared to the one according to the above-mentioned first prior patent application. Indeed, the values DeltaSIRi are signaled for each value of "i", i.e. for all possible values of TTI for the TrCHs multiplexed into the CCTrCH, therefore up to four values (the four possible values for TTI). Thus this second method does not make an efficient use of available radio resources, or needlessly contributes to a traffic increase in the network. Besides this second method increases the complexity, compared to the first one.

In a second European patent application, n° 00400357.0 filed on February 8, 2000 by Applicant, a solution has been proposed to solve this problem.

Briefly, the basic idea in this second prior patent application is that the effects of the transmission gaps mainly occur during the compressed frame and during one frame (called recovery frame) following the compressed frame, and not for all frames of the TTI. This is advantageously used in order to reduce the amount of required signaling.

Indeed, if the component of the target SIR offset which is intended to compensate for the effects of the transmission gap is only applied for the compressed frame and for the recovery frame, this component does not need to be different for each of the TrCHi which are multiplexed into the CCTrCH. Besides, these frames are sufficient to compensate for the effects of power control interruption during a transmission gap, and they are also sufficient to compensate for the effects of coding degradation due to a transmission gap for each TrCHi, because this degradation mainly affects the shortest TTIs. This component can only, at least if necessary, be different for each type of frame (i.e. compressed or recovery) for which it is applied, but this, nevertheless, still requires less signaling than in the above-mentioned second method.

An example of algorithm disclosed in this second prior patent application for the case of compressed mode by puncturing is the following.

For each frame, the target SIR offset during compressed mode, compared to normal mode is:

$$\Delta SIR = \max (\Delta SIR1\_compression, ... , \Delta SIRn\_compression) + \Delta SIR\_coding$$

where "n" is the number of TTI lengths for all TrChs of the CCTrCh, $F_i$ is the length in number of frames of the i-th TTI and where $\Delta SIR\_coding$ fulfills:

- $\Delta SIR\_coding$= DeltaSIR for compressed frames
- $\Delta SIR\_coding$= DeltaSIRafter for recovery frames
- $\Delta SIR\_coding$= 0 otherwise

and $\Delta SIRi\_compression$ is defined by :

- $\Delta SIRi\_compression$= 10 log ($N*F_i$ / ($N*F_i$ - $TGL_i$)) if there is a transmission gap within the current TTI of length $F_i$ frames, where $TGL_i$ is the gap length in number of slots (either from one gap or a sum of gaps) in the current TTI of length $F_i$ frames, and N is the number of slots per frame (N= 15 in the UMTS standard)
- $\Delta SIRi\_compression$= 0 otherwise.

In this algorithm, max ($\Delta SIR1\_compression, ... , \Delta SIRn\_compression$) corresponds to said first component of the target SIR offset $\Delta SIRframe$, and $\Delta SIR\_coding$ corresponds to said second component of this target SIR offset.

In this algorithm, the second component $\Delta SIR\_coding$ of the target SIR offset has different values for the compressed and the recovery frames, respectively a compressed-frame value DeltaSIR, and a recovery-frame value DeltaSIRafter.

Since the bit rate variation will be known by the UE, only the additional target SIR increase (DeltaSIR, DeltaSIRafter) due to degraded performances during compressed frames needs to be signaled.

Besides, in the particular case where the transmission gap overlaps two frames (case also referred to as double-frame method in UMTS, as opposed to the case where the transmission gap is within a same frame, also referred to as single-frame method in UMTS), the second compressed frame (with the second part of the transmission gap) may be considered as the recovery frame ($\Delta SIR\_coding$ = DeltaSIRafter). Thus, in this case, the first frame following the two consecutive compressed frames is not considered as a recovery frame ($\Delta SIR\_coding$ = 0).

Alternatively, the second compressed frame (with the second part of the transmission gap) could be considered as a compressed frame ($\Delta SIR\_coding$ = DeltaSIR) and the first frame following these two consecutive compressed frames could be considered as a recovery frame ($\Delta SIR\_coding$ = DeltaSIRafter). In yet another alternative, the second compressed frame could be considered as a compressed and recovery frame ($\Delta SIR\_coding$ = DeltaSIR + DeltaSIRafter, or any other combination). Or more generally, and in order to reduce the amount of signaling and the complexity, the component $\Delta SIR\_coding$ would be determined based on the values DeltaSIR and DeltaSIRafter, without signaling any further value(s).

Now, compressed mode by puncturing still raises another problem. Depending on the method (single-frame method, or double-frame method) which is used, and depending on the compressed mode parameters which are used to define a compressed mode pattern, it may happen that the transmission gap length is different in different TTIs having a given TTI length and therefore that the puncturing rate is different in these different TTIs. This is in particular the case when transmission gaps sometimes overlap two consecutive TTIs, or sometimes are within a same TTI. This is also the case when a transmission gap overlapping two consecutive TTIs is not divided equally between these two consecutive TTIs. Since one of the purposes of the target SIR offset which is signaled is to compensate for the coding degradation in TTIs due to excessive puncturing because of transmission gaps, such cases would then require to signal different values of target SIR offset, for each of these different TTIs. Therefore this would result in a further increase in the amount of signalling which is required to compensate for the effects of transmission gaps, which is not desirable.

In the above-mentioned standardization proposal, this problem is solved by avoiding such situations, by setting restrictions on compressed mode parameters TGP (Transmission Gap Period), TGD (Transmission Gap Distance) and SFN (System Frame Number). However, as the aim of such restrictions is to never have different puncturing rates in different TTIs for all TTI lengths, this results in numerous restrictions, which in fact penalize the compressed mode by puncturing compared to other compressed modes, which is not desirable.

Therefore there is a need to avoid such drawbacks, while still providing an efficient compensation for outer-loop power control in compressed mode, in such situations.

In particular, what would be desirable is a method that would enable to keep the same amount of signalling than in the above-mentioned second prior patent application, and that would only need to set minor restrictions on compressed mode parameters.

An object of the present invention is a method for setting a transmission quality target value for power control in a mobile radiocommunication system, a method wherein:

- an offset is applied in an anticipated way to said transmission quality target value to compensate for the effects of a compressed mode whereby transmission is interrupted during transmission gaps in compressed frames, and the transmission rate is correspondingly increased, in transmission time intervals including compressed frames, to compensate for said transmission gaps,
- said offset includes a first component intended to compensate for the effects of said transmission rate increase, and a second component intended to compensate for the effects of said transmission gaps, said effects of transmission gaps including a transmission quality degradation due to said transmission rate increase,
- different values are provided for said second component to compensate for the effects of transmission gaps having different lengths in different transmission time intervals, only if the transmission time interval length is short enough for said degradation to be significant.

According to another object :

- a plurality of transport channels are time-multiplexed in each frame of a physical channel whose power is controlled by said power control,
- the transmission time interval length may be different for each of said transport channels,
- different values are provided for said second component to compensate for the effects of transmission gaps having different lengths in different transmission time intervals having a given transmission time interval length, only for transport channels for which the transmission time interval length is short enough for said degradation to be significant.

According to another object, said different values are provided for said second component, for a transmission time interval length corresponding to a two-frames length.

According to another object, in the case where the position of transmission gaps relatively to transmission time intervals is such that a transmission gap always overlaps two consecutive transmission time intervals, respectively a first and a second transmission time interval, said transmission gap including two parts, respectively a first part in a first compressed frame, or last frame of said first transmission time interval, and a second part in a second compressed frame, or first frame of said second transmission time interval, said different values include a first value, intended to compensate for said degradation due to said first part of said transmission gap, and applied for said first compressed frame, and a second value, intended to compensate for said degradation due to said second part of said transmission gap, and applied for said second compressed frame.

According to another object,
in the case where the position of transmission gaps relatively to transmission time intervals is such that a transmission gap:

- sometimes overlaps two consecutive transmission time intervals, respectively a first and a second transmission time interval, said transmission gap including two parts, respectively a first part in a first compressed frame, or last frame of said first transmission time interval, and a second part in a second compressed frame, or first frame of said second transmission time interval,
- sometimes is within a same transmission time interval, said transmission gap including two parts, respectively a first part in a first compressed frame of said same transmission time interval, and a second part in a second compressed frame of said same transmission time interval,

said different values include:

- a first value, intended to compensate for the degradation due to said first part of said transmission gap, applied for said last frame of said first transmission time interval, and a second value, intended to compensate for the degradation due to said second part of said transmission gap, for said first frame of said second transmission time interval,

- a third value applied for said first compressed frame of said same transmission time interval, and a fourth value applied for said second compressed frame of said same transmission time interval, said third and fourth value being intended to compensate for the degradation due to said transmission gap.

According to another object, said first, second, third and fourth values are replaced by a first and a second common value, one of said first and second common values being higher than the other one, and said second component is applied with the lower or the higher of said values, depending on whether a transmission gap overlaps two consecutive transmission time intervals or is within a same transmission time interval.

According to another object of the present invention, said transmission quality is represented by a signal-to-interference ratio.

According to another object of this invention, said mobile radiocommunication system is of CDMA type.

According to another object of this invention, said power control is performed in the uplink transmission direction of said mobile radiocommunication system.

According to another object of this invention, said power control is performed in the downlink transmission direction of said mobile radiocommunication system.

Another object of the present invention is a mobile radiocommunication system including at least a transmitting entity and a receiving entity involved in said power control, wherein means are provided in a first one of said entities, for applying an offset to a transmission quality target value according to said method for setting a transmission quality target value.

According to another object of this invention, means are provided in said first entity for determining and /or updating said offset.

According to another object of this invention, means are provided in a second one of said entities for signalling to said first entity previous values necessary for determining and/or updating said offset.

According to another object of this invention, means are provided in a second one of said entities for signalling said offset to said first entity.

According to another object of this invention, means are provided in a second one of said entities for signalling to said first entity the occurrence of said compressed mode.

According to another object of this invention, means are provided in a second one of said entities for signalling said offset to said first entity together with the signalling of the occurrence of said compressed mode.

According to another object of this invention, means are provided in a second one of said entities for signalling said offset to said first entity together with the signalling of compressed mode parameters.

According to another object of this invention, said signalling is performed for each compressed frame.

According to another object of this invention, in the case where compressed frames occur periodically, said signalling is performed once for all, for all compressed frames of a thus defined period.

According to another object of this invention, said signaling includes signaling said second component only.

According to another object, said signalling of said second component includes signalling said first and second values.

According to another object, said signalling of said second component includes signalling said first, second, third and fourth values.

According to another object, said signalling of said second component includes signalling said first and second common values.

According to another object of this invention, means are provided in any one of said two entities for recording said offset.

According to another object of this invention, one of said two entities is a mobile radiocommunication network entity.

According to another object of this invention, one of said two entities is a mobile station.

Another object of the present invention is a mobile radiocommunication network entity comprising means for applying an offset to a transmission quality target value according to said method for setting a transmission quality target value, in uplink.

Another object of the present invention is a mobile station comprising means for applying an offset to a transmission quality target value according to said method for setting a transmission quality target value, in downlink.

Another object of this invention is a mobile radiocommunication network entity comprising, for enabling a mobile station to apply an offset according to said method for setting a transmission quality target value, in downlink:

- means for signalling said offset to said mobile station.

According to another object of this invention, said mobile radiocommunication network entity comprises:

- means for signalling to said mobile station the occurrence of said compressed mode.

According to another object of this invention, said mobile radiocommunication network entity comprises :

- means for signalling said offset to said mobile station, together with the signalling of the occurrence of said compressed mode.

According to another object of this invention, said signalling is performed together with the signalling of compressed mode parameters.

According to another object of this invention, said signalling is performed for each compressed frame.

According to another object of this invention, in the case where compressed frames occur periodically, said signalling is performed once for all, for all compressed frames of a thus defined period.

According to another object of this invention, said signalling includes signalling said second component only.

According to another object, said signalling of said second component includes signalling said first and second values.

According to another object, said signalling of said second component includes signalling said first, second, third and fourth values.

According to another object, said signalling of said second component includes signalling said first and second common values.

Another object of the present invention is a method for setting compressed mode parameters for compressed mode in a mobile radiocommunication system, wherein transmission is interrupted during transmission gaps in compressed frames, and the transmission rate is correspondingly increased, in transmission time intervals including compressed frames, to compensate for said transmission gaps, a method wherein said transmission gap period is set to an even number of frames.

According to another object, the system frame number is additionnaly set such that a transmission gap always begins in the first frame of a transmission time interval.

Another object of the present invention is a mobile radiocommunication network wherein means are provided for transmitting downlink signals in compressed mode, with the transmission gap period set to an even number of frames.

According to another object, the system frame number is additionnaly set such that a transmission gap always begins in the first frame of a transmission time interval.

Another object of the present invention is a mobile station wherein means are provided for transmitting uplink signals in compressed mode, with the transmission gap period set to an even number of frames.

According to another object, the system frame number is additionnaly set such that a transmission gap always begins in the first frame of a transmission time interval.

These and other objects of the present invention will become more apparent from the following description taken in conjunction with the accompanying drawings:

- figure 1 is a diagram intended to illustrate some particularities of the compressed mode by puncturing, for example in the case of the UMTS standard,
- figure 2 is a diagram intended to illustrate some compressed parameters,
- figure 3 is a diagram intended to illustrate one case of occurrence of transmission gaps, to which the present invention may be applicable,
- figure 4 is a diagram intended to illustrate another case of occurrence of transmission gaps, to which the present invention may be applicable,
- figure 5 is a diagram intended to illustrate an example of means which may be used in a mobile station and in a mobile radiocommunication network entity to perform a method according to the present invention, for uplink power control,
- figure 6 is a diagram intended to illustrate an example of means which may be used in a mobile radiocommunication network entity and in a mobile station, to perform a method according to the present invention, for downlink power control.

It is recalled that several parameters, or compressed mode parameters, enable to define a compressed mode pattern, and are defined in Technical Specification 3G TS25 212. Amongst them:

- TGP: Transmission Gap Period, is the period of repetition of a set of consecutive frames containing up to 2 transmission gaps,
- TGD: Transmission Gap Distance, is the duration of transmission between two consecutive transmission gaps within a transmission gap period, expressed in number of slots. In case there is only one transmission gap in the transmission gap period, this parameter shall be set to zero,
- TGL1: Transmission Gap Length, is the duration of no transmission, expressed in number of slots, for the first transmission gap in the transmission gap period,
- TGL2: Transmission Gap Length, is the duration of no transmission, expressed in number of slots, for the second transmission gap in the transmission gap period (if any),
- PD: Pattern duration, is the total time of all TGPs expressed in number of frames,
- SFN: System Frame Number, is the system frame number when the first transmission gap starts.

Note that there are one or two transmission gaps in each transmission gap period depending on the value of TGD. Figure 2 taken from Technical Specification 3G TS25 212 illustrates some of these parameters with TGD > 0.

Besides, a transmission gap can either be provided within a single frame (which corresponds to a so-called single-frame method), or overlap two consecutive frames (which corresponds to a so-called double-frame method).

The single-frame method does not raise the problems addressed by the present application, because the transmission gap length, and therefore the puncturing rate, is then identical for all TTIs of a given TTI length.

In the case where the double-frame method is used, depending on the compressed mode parameters, the puncturing rate may, or may not, be identical for all TTIs.

One case where the puncturing rate is not identical for all TTIs is the case where transmission gaps sometimes overlap two consecutive TTIs, and sometimes are within a same TTI.

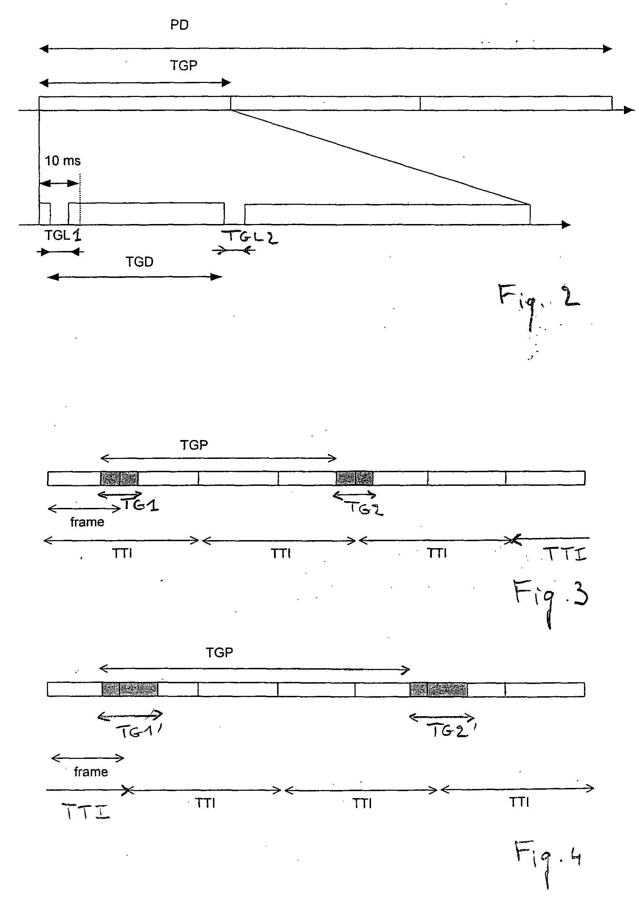

For example, in figure 3 where there is illustrated for example only one transport channel with a 20-ms TTI, and where there are illustrated four consecutive TTIs and two transmission gaps (noted TG1 and TG2), the first transmission gap TG1 is fully included in the first TTI, whereas the second one TG2 overlaps the second and the third TTI. Therefore, in this case the puncturing rate will be twice more in the first TTI than in the two following ones. Therefore, it would be needed to signal different values of target SIR increase for these different TTIs.

Another case where the puncturing rate is not identical for all TTIs is the case where transmission gaps overlapping two consecutive TTIs are not divided equally between these two consecutive TTIs.

For example, in figure 4 where there is also illustrated for example only one transport channel with a 20-ms TTI, and where there are illustrated four consecutive TTIs and two transmission gaps (noted TG1' and TG2'), the first transmission gap TG1' overlaps the first and the second TTI, and the second one TG2' overlaps the third and the fourth TTI. In the case where a transmission gap overlapping two consecutive TTIs is not divided equally between these two TTIs (as is the case for example in figure 4) the puncturing rate also varies from one TTI to the other one, and therefore it would also be needed to signal different values of target SIR increase for these different TTIs.

To avoid such an increase in the amount of signaling, the present invention is based on the following ideas.

Since the transmission gap length is limited to 7 slots per frame in UMTS, the puncturing rate is significant only for TTIs of N and 2N slots where N is the number of slots per frame (15 in UMTS). Indeed, if F denotes the number of frames per TTI, the puncturing rate required to have a transmission gap of length TGL in the TTI is TGL/(F*N). Since TGL $\leq$ 7, the puncturing rate is below 7/(15*F) in UMTS.

Moreover, when the puncturing rate is low, the term DeltaSIR_compression (with the notations of the second prior patent application) is sufficient to compensate for the additional puncturing required to compress the frame, and the term DeltaSIR_coding (also with the notations of the second prior patent application) mainly has to compensate for the power control interruption. Thus, for a TTI length which is strictly above 2N slots, if the puncturing rate is not constant in all TTIs, even if the term DeltaSIR_coding is the same for all TTIs, this will have a low impact on the performance.

In other words, different values have to be provided for DeltaSIR_coding (i.e. for the term referred to as second component) to compensate for different lengths of transmission gaps in different transmission time intervals, only if the transmission time interval length is short enough for the degradation due to said additional puncturing to be significant.

Or, in the case of different TrCHs multiplexed into a CCTrCH, different values have to be provided for said second component to compensate for different lengths of transmission gaps in different transmission time intervals, only for TrCHs for which the transmission time interval length is short enough for said degradation to be significant.

In the considered example of UMTS, said different values are provided for said second component, for a transmission time interval length corresponding to a two-frames length.

Additionnaly, with a method according to the second prior patent application (i.e. with two values DeltaSIR and DeltaSIRafter being provided for the term DeltaSIR_coding) it is not excluded to have different puncturing rates in different TTIs. It is only preferable that the position of the transmission gap relative to the TTI of 2N slots be always the same (i.e. the transmission gap must not be sometimes within a same TTI, and sometimes overlapping two consecutive TTIs, but always, either within a same TTI, or overlapping two consecutive TTIs).

The case where the transmission gap is always within a same transmission time interval does not raise the problems addressed by the present application, because the transmission gap length, and therefore the puncturing rate, is then identical for all TTIs of a given TTI length.

The case where the transmission gap is always overlapping two consecutive transmission time intervals is illustrated in figure 4 for example.

In the case where a transmission gap overlapping two consecutive TTIs is not divided equally between these two TTIs (as is the case for the example illustrated in figure 4) the puncturing rate varies from one TTI to the other one, but different target SIR variations can be applied for these different puncturing rates with still only two signaled values (i.e. a first value DeltaSIR and a second value DeltaSIRafter). The first value (DeltaSIR) will enable to compensate for the first puncturing rate, whereas the second value (DeltaSIRafter) will enable to compensate for the second puncturing rate. Note that the target SIR increase will only be applied in one frame of each TTI whereas the whole TTI is punctured. However, this can be done since the channel coding and interleaving is performed on a TTI per TTI basis and therefore, increasing the target SIR in one frame of the TTI enables to increase the performance for all information bits of the TTI.

In other words, in the case where the position of transmission gaps relatively to transmission time intervals is such that a transmission gap always overlaps two consecutive transmission time intervals, respectively a first and a second transmission time interval, said transmission gap including two parts, respectively a first part in a first compressed frame, or last frame of said first transmission time interval, and a second part in a second compressed frame, or first frame of said second transmission time interval, said different values include a first value, intended to compensate for said degradation due to said first part of said transmission gap, and applied for said first compressed frame, and a second value, intended to compensate for said degradation due to said second part of said transmission gap, and applied for said second compressed frame.

This mainly applies to the case where a transmission gap overlapping two consecutive TTIs is not divided equally between these two consecutive TTIs.

In the case where a transmission gap always overlapping two consecutive TTIs is divided equally between these two consecutive TTIs, a method as disclosed in the second prior patent application for the case of double-frame method can be used. In this case, the values DeltaSIR and DeltaSIRafter will not enable to distinguish between two puncturing rates, but between a compressed frame and a recovery frame, in the manner disclosed in the second prior patent application.

Besides, in the case where a transmission gap is always within a same TTI, while ovelapping two consecutive frames, a method as disclosed in the second prior patent application for the case of double-frame method can also be used.

Besides, the only useful restriction to ensure that the position of the transmission gap relatively to the TTI of 2N slots be always the same (i.e. always, either within a TTI, or overlapping two consecutive TTIs) is TGP even (i.e. an even number of frames in the transmission gap period). This can simply be checked for exemple from the example of figure 4, where TGP is equal to four frames (as compared to figure 3, where TGP is equal to three frames).

If a transmission gap is always overlapping two consecutive TTIs, the puncturing rate is about the same in all TTIs if the transmission gap is approximately divided equally between the two consecutive TTIs. This is in particular the case in UMTS.

However, if this is not the case, the situation where the puncturing rate is not the same in all TTIs can more generally be avoided by providing that the system frame number SFN is set such that the transmission gap always starts in the first frame of the TTI (which generally means SFN even for the first frame of the TTI). Indeed, in this case the puncturing rate is the same in all TTIs because the transmission gap is always within a same TTI.

It should however be noted that the case where the system frame number is set such that the transmission gap does not start in the first frame of the TTI (which generally means SFN odd for the first frame of the TTI) is possible, contrary to what is the case with the above-mentioned standardization proposal. Indeed, in this standardization proposal the target SIR variations are applied on a TTI per TTI basis, while in the present application (as well as in the second prior patent application) they are applied on a frame per frame basis.

Besides, a TTI length of N slots does not require any restriction on the compressed mode parameters (this is due to the fact that the TTI length can then be divided by the TGP length expressed in number of slots).

In the above description, only the case where TGD is equal to zero has been considered.

With a TTI length of 2N slots and TGD>0 (i.e. when there are two transmission gaps in each transmission gap period), different SIR target variations need to be signaled for both transmission gaps except when these transmission gaps have the same length and the same position in the TTI of 2N slots. In this last case, the same target SIR variations could be used.

However the restrictions on compressed mode parameters are similar to the case where TGD is equal to zero, i.e. the only useful restriction is TGP even.

Additionally, and whatever the value of TGD, in case TGP is odd (which corresponds to the example of figure 3), a solution could be to signal two values (DeltaSIR, DeltaSIRafter) for the cases where the transmission gap is within a same TTI, and two other values for the cases where it overlaps two consecutive TTIs. This avoids having a restriction on TGP but requires twice more signaling.

In other words:

in the case where the position of transmission gaps relatively to transmission time intervals is such that a transmission gap:

- sometimes overlaps two consecutive transmission time intervals, respectively a first and a second transmission time interval, said transmission gap including two parts, respectively a first part in a first compressed frame, or last frame of said first transmission time interval, and a second part in a second compressed frame, or first frame of said second transmission time interval,
- sometimes is within a same transmission time interval, said transmission gap including two parts, respectively a first part in a first compressed frame of said same transmission time interval, and a second part in a second compressed frame of said same transmission time interval,

said different values include:

- a first value, intended to compensate for the degradation due to said first part of said transmission gap, applied for said last frame of said first transmission time interval, and a second value, intended to compensate for the degradation due to said second part of said transmission gap, for said first frame of said second transmission time interval,
- a third value applied for said first compressed frame of said same transmission time interval, and a fourth value applied for said second compressed frame of said same transmission time interval, said third and fourth value being intended to compensate for the degradation due to said transmission gap.

Another possibility is to signal only two values and to choose for each signaled value (DeltaSIR or DeltaSIRafter), the maximum required value between the two possible values (depending on the position of the transmission gap relative to the TTI boundaries). This last solution enables to keep the same amount of signaling and to reach the quality of service in all TTIs but is not optimal in term of performance (the average target SIR will be larger).

In other words, said first, second, third and fourth values may be replaced by a first and a second common value, one of said first and second common values is higher than the other one, and said second component is applied with the lower or the higher of said values, depending on whether a transmission gap overlaps two consecutive transmission time intervals or is within a same transmission time interval.

In the same way as disclosed in the above-mentioned prior patent applications, in downlink for example, the UE will have to increase the target SIR by this offset, and then decrease it back by the same value when this increase no longer applies. This target SIR variation is done additionally to the usual downlink outer-loop algorithm that will have to take it into account. The UE may increase simultaneously its transmit power, and then decrease it back by the same value when it no longer applies, in order for the downlink received SIR to be as quickly as possible close to the new target SIR.

In the same way as indicated in the above-mentioned prior patent applications, the component (or second component) of the target SIR offset which needs to be signaled to the UE, may have predetermined values, which may be determined in any way.

For example these values may be seen as system parameters and be determined accordingly by the operator of the system. They may also be prealably determined, in particular by simulation. In either case, they may be updated during operation. They may also be determined during operation based on previously obtained values , for example by averaging. In any case the obtention mode of said predetermined values should take into account all factors that are likely to influence said component of said offset, or combinations of such factors.

Besides, they may be known in any one of the two entities (transmitting entity and receiving entity) involved in a power control process, to be used locally in this entity, or signalled to the other one of said entities, to be used in this entity.

Besides, they may be determined and/or updated in any of said two entities, based on statistics on previously obtained values, available either locally in this entity, or signalled to this entity by the other one of said entities.

Besides, they may be recorded in any one of said entities, to be recovered when necessary.

Besides, the occurrence of the compressed mode may either be known locally by the entity in charge of applying the corresponding offset , or signalled to this latter entity by the other one of said entities.

Thus, every possibility may be envisaged; therefore the examples given in this description should be understood as illustrative only, and having no limitative character.

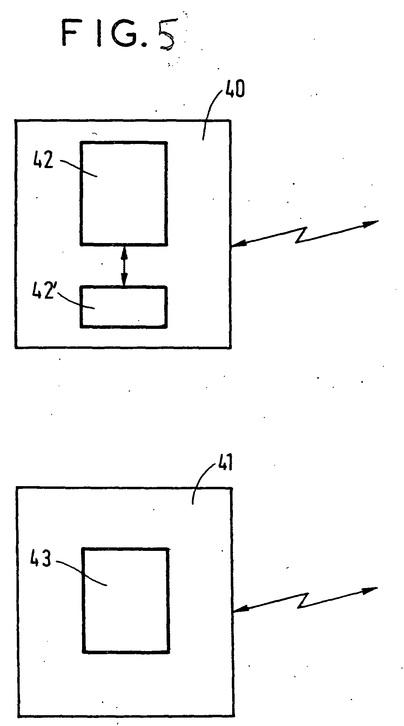

Figure 5 is a diagram intended to illustrate an example of means which may be used in a mobile radiocommunication network entity, noted 40, and in a mobile station noted 41, to perform a method according to the present invention, for uplink power control.

A mobile radiocommunication network entity 40, such as in particular BTS for "Base Transceiver Station" (or Node B in UMTS) and /or BSC for "Base Station Controller" (or RNC for "Radio Network Controller" in UMTS), may for example comprise, for performing said method in said uplink transmission direction (and further to other classical means not mentioned here):

- means 42 for , upon the occurrence of the compressed mode, controlling the outer-loop power control algorithm in an anticipated way, for example by implementing an algorithm as recalled above and disclosed in the second prior patent application.

Mobile radiocommunication network entity 40 may also for example comprise, for performing said method in said uplink transmission direction (and further to other classical means not mentioned here):

- means, also noted 42 for, upon the occurrence of the compressed mode, controlling the inner-loop power control algorithm, in an anticipated way.

The offsets to be applied may for example have predetermined values, which may for example be determined according to any of the above mentioned possibilities.

In any case, mobile radiocommunication network entity 40 for example may comprise :

- means 42' for recording said offsets.

A mobile station 41 (or User Equipment UE in UMTS) may for example comprise, for performing said method in said uplink transmission direction (and further to other classical means not mentioned here):

- means 43 for signalling to a mobile radiocommunication network entity the occurrence of the compressed mode.

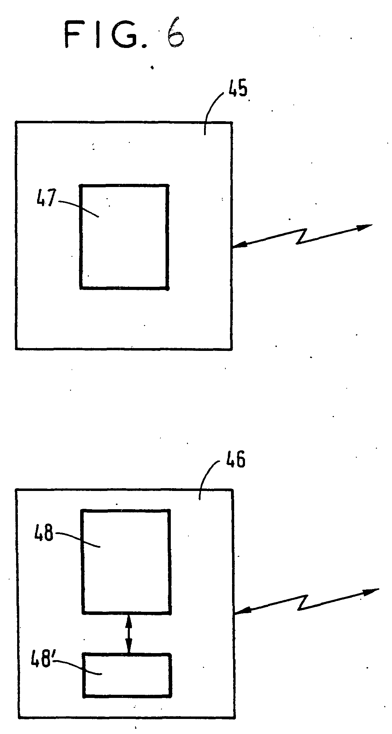

Figure 6 is a diagram intended to illustrate an example of means which may be used in a mobile radiocommunication network entity, noted 45, and in a mobile station, noted 46, to perform a method according to the present invention, for downlink power control.

A mobile station 46 (or User Equipment UE in UMTS) may for example comprise, for performing said method in said downlink transmission direction (and further to other classical means not mentioned here):

- means 48 for, upon the occurrence of the compressed mode, controlling the outer-loop power control algorithm in an anticipated way, for example by implementing an algorithm as recalled above and disclosed in the second prior patent application.

Mobile station 46 may also for example comprise, for performing said method in said downlink transmission direction (and further to other classical means not mentioned here):

- means, also noted 48 for, upon the occurrence of the compressed mode, controlling the inner-loop power control algorithm, in an anticipated way.

The offsets to be applied may for example have predetermined values, which may for example be determined according to any of the above mentioned possibilities.

In one embodiment, mobile station 46 may comprise:

- means 48' for recording said offsets.

In another embodiment, mobile radiocommunication network entity 45, such as in particular BTS for "Base Transceiver Station" (or Node B in UMTS) and /or BSC for "Base Station Controller" (or RNC for "Radio Network Controller" in UMTS), may for example comprise, for performing said method in said downlink transmission direction (and further to other classical means not mentioned here):

- signalling means 47 for signalling said offsets, or advantageously only said second component of said offsets, to mobile station 46.

Mobile radiocommunication network entity 45 may also for example comprise:

- signalling means , also noted 47, for signalling to a mobile station the occurrence of the compressed mode.

Advantageously, mobile radiocommunication network entity 45 may comprise :

- signalling means (also noted 47) for signalling said offset (or advantageously only said second component of said offset) to mobile station 46, together with the signalling of the occurrence of the compressed mode.

Siganlling of said second component may include, according to the above-mentioned possibilities:

- signaling said first and second values,
- signaling said first, second, third and fourth values,
- signaling said first and second common values.

Besides, said signalling may be performed for each compressed frame.

Alternatively, in the case where compressed frames occur periodically, said signalling may be performed once for all, for all compressed frames of a thus defined period, still in order to reduce the required signalling.

The invention also has for its object a method for setting compressed mode parameters for compressed mode in a mobile radiocommunication system.

According to this method, the transmission gap period is set to an even number of frames.

In this way, the position of transmission gaps relatively to TTIs of 2N slots (i.e. TTIs having a two-frames length) is always the same (i.e. always either within a same TTI, or overlapping two consecutive TTIs).

Besides, the system frame number may additionnaly be set set such that a transmission gap always begins in the first frame of a transmission time interval.

In this way, the situation where transmission gaps overlap two consecutive TTIs is avoided.

The present invention also has for its object a mobile radiocommunication network entity wherein means are provided for transmitting downlink signals in compressed mode, with the transmission gap period set to an even number of frames.

Additionnaly means may be provided for transmitting downlink signals in compressed mode, with the system frame number additionnaly set such that a transmission gap always begins in the first frame of a transmission time interval.

The present invention also has for its object a mobile station wherein means are provided for transmitting uplink signals in compressed mode, with the transmission gap period set to an even number of frames.

Additionnaly means may be provided for transmitting uplink signals in compressed mode, with the system frame number additionnaly set such that a transmission gap always begins in the first frame of a transmission time interval.

## Claims

1. A method for setting a transmission quality target value for power control in a mobile radiocommunication system, a method wherein:

   - an offset is applied in an anticipated way to said transmission quality target value to compensate for the effects of a compressed mode whereby transmission is interrupted during transmission gaps in compressed frames, and the transmission rate is correspondingly increased, in transmission time intervals including compressed frames, to compensate for said transmission gaps,
   - said offset includes a first component intended to compensate for the effects of said transmission rate increase, and a second component intended to compensate for the effects of said transmission gaps, said effects of transmission gaps including a transmission quality degradation due to said transmission rate increase,
   - different values are provided for said second component to compensate for the effects of transmission gaps having different lengths in different transmission time intervals, only if the transmission time interval length is short enough for said degradation to be significant.

2. A method according to claim 1, wherein:

   - a plurality of transport channels are time-multiplexed in each frame of a physical channel whose power is controlled by said power control,

- the transmission time interval length may be different for each of said transport channels,
- different values are provided for said second component to compensate for the effects of transmission gaps having different lengths in different transmission time intervals having a given transmission time interval length, only for transport channels for which the transmission time interval length is short enough for said degradation to be significant.

3. A method according to any of claims 1 and 2, wherein said different values are provided for said second component, for a transmission time interval length corresponding to a two-frames length.

4. A method according to any of claims 1 to 3, wherein, in the case where the position of transmission gaps relatively to transmission time intervals is such that a transmission gap always overlaps two consecutive transmission time intervals, respectively a first and a second transmission time interval, said transmission gap including two parts, respectively a first part in a first compressed frame, or last frame of said first transmission time interval, and a second part in a second compressed frame, or first frame of said second transmission time interval, said different values include a first value, intended to compensate for said degradation due to said first part of said transmission gap, and applied for said first compressed frame, and a second value, intended to compensate for said degradation due to said second part of said transmission gap, and applied for said second compressed frame.

5. A method according to any of claims 1 to 3, wherein:

   in the case where the position of transmission gaps relatively to transmission time intervals is such that a transmission gap:

   - sometimes overlaps two consecutive transmission time intervals, respectively a first and a second transmission time interval, said transmission gap including two parts, respectively a first part in a first compressed frame, or last frame of said first transmission time interval, and a second part in a second compressed frame, or first frame of said second transmission time interval,
   - sometimes is within a same transmission time interval, said transmission gap including two parts, respectively a first part in a first compressed frame of said same transmission time interval, and a second part in a second compressed frame of said same transmission time interval,

   said different values include:

   - a first value, intended to compensate for the degradation due to said first part of said transmission gap, applied for said last frame of said first transmission time interval, and a second value, intended to compensate for the degradation due to said second part of said transmission gap, for said first frame of said second transmission time interval,
   - a third value applied for said first compressed frame of said same transmission time interval, and a fourth value applied for said second compressed frame of said same transmission time interval, said third and fourth value being intended to compensate for the degradation due to said transmission gap.

6. A method according to claim 5, wherein said first, second, third and fourth values are replaced by a first and a second common value, one of said first and second common values being higher than the other one, and said second component is applied with the lower or the higher of said values, depending on whether a transmission gap overlaps two consecutive transmission time intervals or is within a same transmission time interval.

7. A method according to any of claims 1 to 6, wherein said transmission quality is represented by a signal-to-interference ratio.

8. A method according to any of claims 1 to 7, wherein said mobile radiocommunication system is of CDMA type.

9. A method according to any of claims 1 to 8, wherein said power control is performed in the uplink transmission direction of said mobile radiocommunication system.

10. A method according to any of claims 1 to 9, wherein said power control is performed in the downlink transmission direction of said mobile radiocommunication system.

11. A mobile radiocommunication system including at least a transmitting entity and a receiving entity involved in said power control, wherein means are provided in a first one of said entities, for applying an offset to a transmission quality target value according to any of claims 1 to 10.

12. A mobile radiocommunication system according to claim 11, wherein means are provided in said first entity for determining and /or updating said offset.

13. A mobile radiocommunication system according to claim 12, wherein means are provided in a second one of said entities for signalling to said first entity previous values necessary for determining and/or updating said offset.

14. A mobile radiocommunication system according to claim 11, wherein means are provided in a second one of said entities for signalling said offset to said first entity.

15. A mobile radiocommunication system according to any of claims 11 to 14, wherein means are provided in a second one of said entities for signalling to said first entity the occurrence of said compressed mode.

16. A mobile radiocommunication system according to any of claims 14 to 15, wherein means are provided in a second one of said entities for signalling said offset to said first entity together with the signalling of the occurrence of said compressed mode.

17. A mobile radiocommunication system according to any of claims 13 to 16, wherein said signalling is performed for each compressed frame.

18. A mobile radiocommunication system according to any of claims 13 to 16, wherein, in the case where compressed frames occur periodically, said signalling is performed once for all, for all compressed frames of a thus defined period.

19. A mobile radiocommunication system according to any of claims 13 to 18, wherein said signaling includes signaling said second component only.

20. A mobile radiocommunication system according to claim 19, wherein said signalling of said second component includes signalling said first and second values.

21. A mobile radiocommunication system according to claim 19, wherein said signalling of said second component includes signalling said first, second, third and fourth values.

22. A mobile radiocommunication system according to claim 19, wherein said signalling of said second component includes signalling said first and second common values.

23. A mobile radiocommunication system according to any of claims 11 to 22, wherein means are provided in any one of said two entities for recording said offset.

24. A mobile radiocommunication system according to any of claims 11 to 23, wherein one of said two entities is a mobile radiocommunication network entity.

25. A mobile radiocommunication system according to any of claims 11 to 24, wherein one of said two entities is a mobile station.

26. A mobile radiocommunication network entity comprising means for applying an offset to a transmission quality target value according to any of claims 1 to 10, in uplink.

27. A mobile station comprising means for applying an offset to a transmission quality target value according to any of claims 1 to 10, in downlink.

28. A mobile radiocommunication network entity comprising, for enabling a mobile station to apply an offset to a transmission quality target value according to any of claims 1 to 10, in downlink:

   - means for signalling said offset to said mobile station.

**29.** A mobile radiocommunication network entity according to claim 28, comprising:

- means for signalling to said mobile station the occurrence of said compressed mode.

**30.** A mobile radiocommunication network entity according to any of claims 28 to 29, comprising:

- means for signalling said offset to said mobile station, together with the signalling of the occurrence of said compressed mode.

**31.** A mobile radiocommunication network entity according to any of claims 28 to 30, wherein said signalling is performed together with the signalling of compressed mode parameters.

**32.** A mobile radiocommunication network entity according to any of claims 28 to 31, wherein said signalling is performed for each compressed frame.

**33.** A mobile radiocommunication network entity according to any of claims 28 to 32, wherein, in the case where compressed frames occur periodically, said signalling is performed once for all, for all compressed frames of a thus defined period.

**34.** A mobile radiocommunication network entity according to any of claims 28 to 33, wherein said signalling includes signalling said second component only.

**35.** A mobile radiocommunication system according to claim 34, wherein said signalling of said second component includes signalling said first and second values.

**36.** A mobile radiocommunication system according to claim 34, wherein said signalling of said second component includes signalling said first, second, third and fourth values.

**37.** A mobile radiocommunication system according to claim 34, wherein said signalling of said second component includes signalling said first and second common values.

**38.** A method for setting compressed mode parameters for compressed mode in a mobile radiocommunication system, wherein transmission is interrupted during transmission gaps in compressed frames, and the transmission rate is correspondingly increased, in transmission time intervals including compressed frames, to compensate for said transmission gaps, a method wherein said transmission gap period is set to an even number of frames.

**39.** A method according to claim 38, wherein the system frame number is additionnaly set such that a transmission gap always begins in the first frame of a transmission time interval.

**40.** A mobile radiocommunication network wherein means are provided for transmitting downlink signals in compressed mode, with the transmission gap period set to an even number of frames.

**41.** A mobile radiocommunication network according to claim 40, wherein means are provided for transmitting downlink signals in compressed mode, with the system frame number additionnaly set such that a transmission gap always begins in the first frame of a transmission time interval.

**42.** A mobile station wherein means are provided for transmitting uplink signals in compressed mode, with the transmission gap period set to an even number of frames.

**43.** A mobile station according to claim 42, wherein means are provided for transmitting uplink signals in compressed mode, with the system frame number additionnaly set such that a transmission gap always begins in the first frame of a transmission time interval.

Fig. 1

Fig. 2

Fig. 3

Fig. 4

# FIG.5

# FIG. 6

European Patent
Office

**EUROPEAN SEARCH REPORT**

Application Number

EP 00 40 0955

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 98 58461 A (ERICSSON TELEFON AB L M) 23 December 1998 (1998-12-23) * abstract * * page 3, line 8 - line 25 * * page 4, line 29 - page 6, line 11 * * figures 5,7 * | 1,38 | H04B7/005 |
| A | SAMPATH A ET AL: "ON SETTING REVERSE LINK TARGET SIR IN A CDMA SYSTEM" IEEE VEHICULAR TECHNOLOGY CONFERENCE,US,NEW YORK, IEEE, vol. CONF. 47, 4 May 1997 (1997-05-04), pages 929-933, XP000736744 ISBN: 0-7803-3660-7 * page 929, left-hand column, line 1 - page 930, left-hand column, line 4 * | 1,38 | |
| A | EP 0 853 393 A (NIPPON TELEGRAPH & TELEPHONE) 15 July 1998 (1998-07-15) * abstract * * column 3, line 8 - column 4, line 47 * * column 7, line 19 - line 40 * * figures 2,3 * | 1 | TECHNICAL FIELDS SEARCHED (Int.Cl.7) H04B |
| A | US 5 745 520 A (STEWART KENNETH A ET AL) 28 April 1998 (1998-04-28) * column 2, line 25 - column 3, line 3 * * figures 4,8 * | 1 | |

The present search report has been drawn up for all claims

| Place of search | Date of completion of the search | Examiner |
|---|---|---|
| THE HAGUE | 30 August 2000 | Lõpez Márquez, T |

EPO FORM 1503 03.82 (P04C01)

## ANNEX TO THE EUROPEAN SEARCH REPORT
## ON EUROPEAN PATENT APPLICATION NO.

EP 00 40 0955

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2000

| Patent document cited in search report | | Publication date | Patent family member(s) | | Publication date |
|---|---|---|---|---|---|
| WO 9858461 | A | 23-12-1998 | AU | 8050198 A | 04-01-1999 |
| | | | EP | 0990314 A | 05-04-2000 |
| EP 0853393 | A | 15-07-1998 | CA | 2230778 A | 31-12-1997 |
| | | | CN | 1198274 A | 04-11-1998 |
| | | | WO | 9750197 A | 31-12-1997 |
| US 5745520 | A | 28-04-1998 | BR | 9702114 A | 12-01-1999 |
| | | | CA | 2220068 A | 18-09-1997 |
| | | | CN | 1182523 A | 20-05-1998 |
| | | | EP | 0827675 A | 11-03-1998 |
| | | | JP | 11508432 T | 21-07-1999 |
| | | | WO | 9734434 A | 18-09-1997 |
| | | | US | 5940430 A | 17-08-1999 |